(19) Europäisches Patentamt
European Patent Office
Office européen des brevets

(11) **EP 0 536 040 B1**

(12) **FASCICULE DE BREVET EUROPEEN**

(45) Date de publication et mention
de la délivrance du brevet:
**22.01.1997 Bulletin 1997/04**

(51) Int Cl.⁶: **G06K 7/08**, G06K 1/12, G07F 7/02

(21) Numéro de dépôt: **92402666.9**

(22) Date de dépôt: **29.09.1992**

(54) **Procédé pour enregistrer un nouveau message codé, à la place d'un message codé antérieur enregistré sur une piste magnétique portée par un document support, par déplacement manuel dudit document et système pour la mise en oeuvre du procédé**

Verfahren zur Aufzeichnung einer neu kodierten Nachricht anstelle einer älteren, auf einer magnetischen Spur eines Trägerdokumentes kodierten Nachricht durch einen manuellen Ersatz dieses Dokumentes und ein System, um dieses Verfahren durchzuführen

Method for recording a new coded message, instead of a previous coded one recorded on a magnetic strip on a support document, by manual displacement of said document and system for carrying out this method

(84) Etats contractants désignés:
**BE DE ES FR GB IT**

(30) Priorité: **04.10.1991 FR 9112241**

(43) Date de publication de la demande:
**07.04.1993 Bulletin 1993/14**

(73) Titulaire: **COMPAGNIE GENERALE D'AUTOMATISME CGA-HBS
F-91220 Brétigny sur Orge (FR)**

(72) Inventeur: **Smeets, Jacques
F-91590 La Ferte Alais (FR)**

(74) Mandataire: **Gosse, Michel et al
c/o ALCATEL ALSTHOM,
Département de Propriété Industrielle,
30, avenue Kléber
75116 Paris (FR)**

(56) Documents cités:
EP-A- 0 361 296    FR-A- 2 501 401
GB-A- 2 015 218    US-A- 4 225 780
US-A- 4 228 348    US-A- 4 304 992
US-A- 4 507 550

EP 0 536 040 B1

## Description

La présente invention concerne un procédé pour enregistrer un nouveau message codé, à la place d'un message codé antérieur enregistré sur une piste magnétique portée par un document support, par déplacement manuel dudit document.

Il existe de nombreuses applications où l'on souhaite lire un message magnétique tout en le modifiant.

C'est par exemple le cas de titres de transport à décompte. Par ailleurs, il est intéressant que le système de lecture-écriture du titre soit un système à déplacement manuel du titre, cela évite en effet une motorisation qui nécessite des éléments mécaniques complexes. En outre, un système à déplacement manuel est moins vulnérable au vandalisme.

Cependant dans un système à déplacement manuel, se pose le problème de la densité linéaire des "bits" du codage magnétique au moment de l'écriture qui doit être indépendante de la vitesse et des variations de vitesse de passage du titre devant le système de lecture-écriture.

Le brevet français 2 637 102 correspondant à EP-A-0 361 296 décrit un système pour la lecture et l'encodage d'une piste magnétique par déplacement manuel du support tel que défini dans le préambule des revendications indépendantes.

Le principe du système consiste en ce que la piste magnétique comporte une premier message codé fixe, suivi d'un second message codé variable modifié à chaque passage du titre dans le système de lecture-écriture, le premier message fixe servant, au moyen d'une tête de lecture, à synchroniser l'écriture à faire sur la seconde partie de la piste magnétique par une tête d'écriture.

Ce système a comme inconvénient qu'il ne permet "d'écrire" que sur la seconde partie de la piste magnétique, le message situé sur la première partie de la piste étant invariable et servant à la synchronisation pour l'écriture sur la seconde partie de la piste.

La présente invention a pour but de permettre une écriture modifiable sur toute la longueur de la piste magnétique.

L'invention a ainsi pour objet un procédé pour enregistrer un nouveau message codé, à la place d'un message codé antérieur enregistré sur une piste magnétique portée par un document support, par déplacement manuel dudit document devant des organes de traitement, lesdits messages codés antérieur et nouveau étant réalisés dans un système de codage autoporteur de leur signal d'horloge et étant composés d'une première partie M1 et d'une seconde partie M2 de longueur sensiblement égales, séparées par un intervalle I, caractérisé en ce que

a) on enregistre la première partie M1 du nouveau message codé sur la première partie de la piste tout en lisant la seconde partie M2 du message antérieur sur la seconde partie de la piste, cette lecture étant utilisée pour synchroniser l'écriture de la première partie du nouveau message sur le signal d'horloge extrait de la lecture de ladite seconde partie du message antérieur,

b) on enregistre la deuxième partie M2 du nouveau message codé sur la deuxième partie de la piste tout en lisant la première partie M1 du nouveau message codé enregistré sous a) sur la première partie de la piste, cette lecture étant utilisée pour synchroniser l'écriture de la seconde partie du nouveau message sur le signal d'horloge extrait de la lecture de ladite première partie dudit nouveau message.

L'invention a aussi pour objet un système pour la mise en oeuvre du procédé selon l'invention, comprenant trois têtes magnétiques alignées, caractérisé en ce que la première tête rencontrée par le document support au cours de son passage dans le système est une tête de lecture dite première tête de synchronisation, la deuxième est une tête d'écriture et la troisième est une tête de lecture dite seconde tête de synchronisation, la tête d'écriture étant reliée à un générateur de signal d'écriture recevant en entrée, d'une part les données dudit nouveau message à enregistrer, et d'autre part un signal d'horloge asservi à la vitesse de défilement du document support, ledit signal d'horloge étant élaboré par un circuit électronique reçevant en entrée les signaux issus de la première et de la seconde tête de synchronisation.

Avantageusement, le système comporte en outre une quatrième tête magnétique qui est une tête de lecture alignée avec les trois autres têtes et située avant ladite première tête de synchronisation dans le sens de passage du document support dans le système, ladite quatrième tête de lecture étant reliée à un module de décodage lui-même relié à un module de traitement qui élabore lesdites données du nouveau message à enregistrer envoyées audit générateur de signal d'écriture.

On va maintenant donner la description d'un exemple particulier de mise en oeuvre de l'invention, dans le cas de son application à des titres de transport, en se référant au dessin annexé dans lequel :

La figure 1 représente un support, muni d'une piste magnétique, utilisé comme titre de transport.

La figure 2 représente schématiquement un système selon l'invention permettant de lire et d'écrire sur la piste magnétique du support représenté figure 1, par déplacement manuel du support devant les organes de lecture et d'écriture.

Les figures 3, et 4 sont des schémas figurant deux positions caractéristiques du support par rapport aux têtes magnétiques au cours de son déplacement manuel devant ces têtes magnétiques.

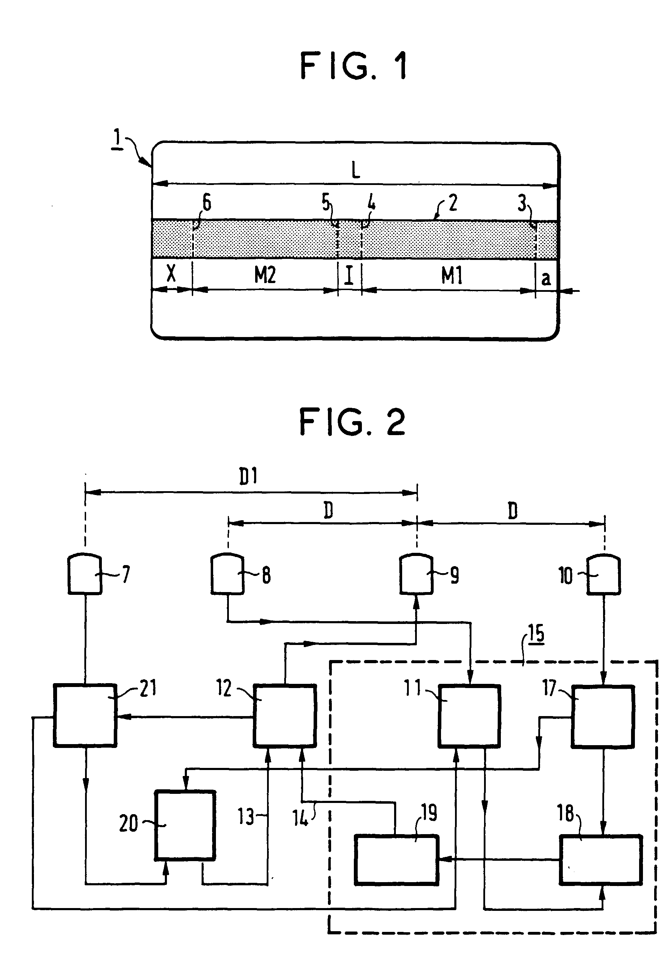

La figure 1 représente un titre de transport 1 qui comporte une piste magnétique 2. Sur cette piste magnétique 2 est enregistré un message codé, divisé en deux parties M1 et M2 sensiblement égales, séparées par un intervalle l.

Les traits verticaux 3, 4, 5 et 6 symbolisent les limites spatiales de ces deux parties de message.

Ce message est un message variable qui est remplacé par un nouveau message à chaque passage du titre devant le système de lecture et d'encodage, disposé dans une borne d'accès à une enceinte permettant d'utiliser un moyen de transport. Ce message variable consiste en un code représentant, par exemple, un certain nombre d'unités de transport, ce nombre étant décrémenté à chaque passage devant un tel système.

La lettre L symbolise la longueur totale de la piste magnétique 2 et la lettre a symbolise la longueur de piste avant le début de la première partie du message. Le message, dans ses deux parties, est réalisé dans un système de codage auto-porteur de son signal d'horloge, tel que par exemple les codes F/2F ; split phase...

En se reportant à la figure 2, le système de lecture et d'encodage comporte d'abord des organes de lecture et d'écriture comprenant quatre têtes magnétiques alignées : une première tête magnétique 8 qui est une tête de lecture dite première tête de synchronisation, une deuxième tête magnétique 9 qui est une tête d'écriture, une troisième tête magnétique 10 qui est une tête de lecture dite seconde tête de synchronisation et enfin une quatrième tête magnétique 7 qui est une tête de lecture et qui précède la première tête de synchronisation 8.

La tête d'écriture 9 reçoit un signal d'écriture produit par un générateur de signal d'écriture 12 qui reçoit, d'une part sur une entrée 13, les données du nouveau message codé à enregistrer sur la piste magnétique 2, et d'autre part, sur une entrée 14, un signal d'horloge d'écriture élaboré par un circuit électronique 15. Les données envoyées sur l'entrée 13 sont fournies par un module de traitement 20.

Ce module de traitement 20 reçoit des informations d'un module de décodage 21 relié à la tête de lecture 7.

Le circuit électronique 15 comprend un premier module de lecture-décodage 17 relié à la seconde tête de synchronisation 10, un second module de lecture-décodage 11 relié à la première tête de synchronisation 8, un module d'analyse-asservissement 18 reçevant les signaux en sortie des modules de lecture-décodage 11, 17 et enfin, un générateur de signal d'horloge d'écriture 19 reçevant en entrée les signaux en provenance du module d'analyse-asservissement 18.

Le module de lecture-décodage 17 est d'autre-part relié au module de traitement 20, de même, le module de décodage 21 est relié au module de lecture-décodage 11 et le générateur de signal d'écriture 12 au module de décodage 21.

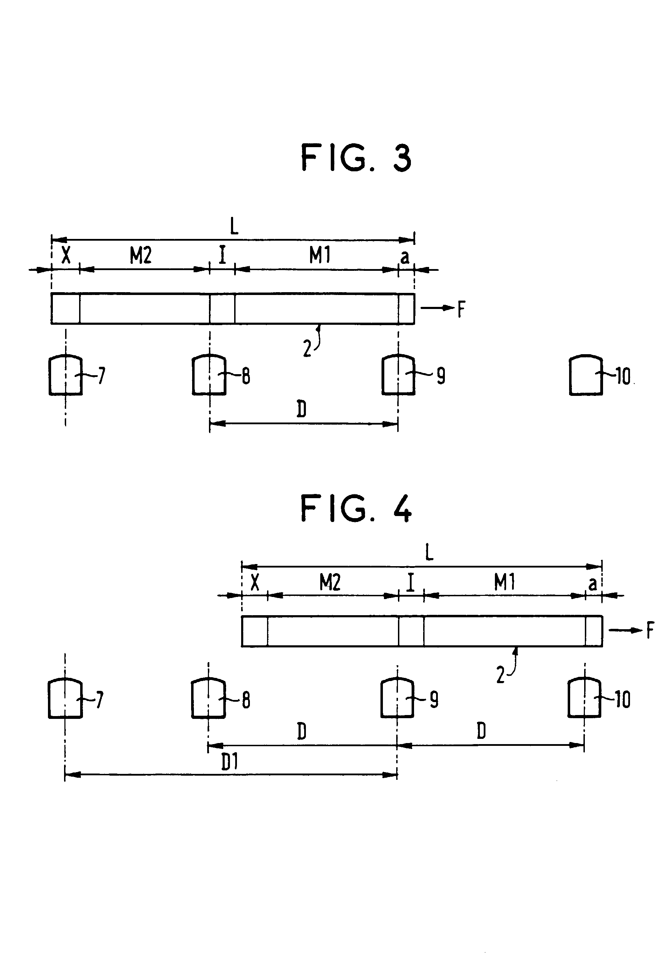

Lorsque le titre de transport 1 se déplace de gauche à droite il commence par passer devant la tête de lecture 7 et les deux parties M1 et M2 du message codé sont lues et décodées dans le module 21. Lorsque la première partie M1 du message parvient devant la première tête de synchronisation 8, il ne se passe rien tant que le module de lecture-décodage 11 n'est pas validé par le module de décodage 21. Celui-ci n'envoie un signal de validation au module 11 que lorsqu'il a déterminé que la tête de lecture 7 a terminé la lecture complète du message. A ce moment là le titre de transport est situé, par rapport aux quatre têtes magnétiques, dans la position représentée sur la figure 3. Le module de décodage 21 valide le module de lecture-décodage 11. Dans ce module 11, les transitions magnétiques de la partie M2 du message passant devant la première tête de synchronisation sont lues et décodées, et le signal d'horloge est séparé des données extraites du signal reçu. Ce signal est envoyé sur le module d'anlayse-asservissement 18. En fonction de la vitesse de défilement du titre de transport 1 devant la première tête de synchronisation 8, l'écart de temps entre les différents "bits" vus par la tête 8 varie. Le module 18 mesure l'écart de temps entre chaque transition et recalcule le rythme de base qui servira à établir le signal d'horloge pour l'écriture. La sortie du module d'analyse-asservissement 18 est envoyé sur le générateur de signal d'horloge 19 qui réalise le signal d'horloge asservi à la vitesse de défilement du titre de transport 1, à partir des éléments de calculs consécutifs à l'analyse réalisée dans le module 18.

L'arrivée du signal d'horloge d'écriture sur l'entrée 14 du générateur d'écriture 12 déclenche, en présence de données sur l'entrée 13, la génération du signal d'écriture et la tête d'écriture 9 enregistre la première partie M1 du nouveau message codé. En fin d'écriture de la première partie M1 du message, le générateur d'écriture 12 remet le module 21 à zéro et l'on se trouve alors dans la position où la première partie M1 du message nouvellement inscrit aborde la deuxième tête de synchronisation 10. Le module de lecteur-décodage 17 joue alors le même rôle que précédemment le module 11, et les modules 18, 19 et 12 agissent de la même façon que précédemment et la tête d'écriture 9 enregistre la deuxième partie M2 du message codé nouveau.

L'ensemble du système est disposé dans une borne de passage, les quatre têtes magnétiques 7, 8, 9 et 10 étant alignées en face d'une fente longitudinale le long de laquelle l'usager fait glisser manuellement son titre de transport 1.

Les figures 3, et 4 montrent deux étapes du passage du titre devant les têtes magnétiques. Sur ces figures, on n'a figuré que la piste magnétique 2 et les quatre têtes magnétiques 7, 8, 9 et 10. La flèche F indique le sens de déplacement du titre porteur de la piste 2.

Dans la position représentée sur la figure 3, la tête de lecture 7 a terminé la lecture de la totalité du message codé permettant la validation du module 11, la première tête de synchronisation 8 lisant la partie M2 du message antérieur sert ainsi à la synchronisation de la tête d'écriture 9 pour l'écriture de la première partie M1 du nouveau message.

Dans la position représentée sur la figure 4, le début de la première partie M1 du message nouvellement inscrit a atteint la seconde tête de synchronisation 10 ce qui a pour effet de déclencher le fonctionnement de la tête d'écriture 9 pour l'écriture de la seconde partie M2 du nouveau message.

On remarquera que sur la figure 3, au début de l'écriture de la première partie M1 du nouveau message par la tête d'écriture 9, la tête de lecture 7 a terminé la lecture complète du message, ainsi le module de traitement 20 peut fournir sur l'entrée 13 les nouvelles données à enregistrer.

A partir de la position de la figure 4, la seconde tête de synchronisation 10 sert également de lecture de contrôle du message nouvellement inscrit, dans ses deux parties M1 et M2 ceci par l'intermédiaire du module de lecture-décodage 17 et du module de traitement 20 qui est relié au module 17.

La longueur M1 et M2 des deux parties du message doivent être égales ou sensiblement égales.

On a donc : M1 = M2 = M. Si a est la longueur de piste avant le début de M1, la longueur totale L de piste magnétique doit être telle que :

$$L \geq 2M + l + a$$

avec l = longueur de l'intervalle entre les deux parties de message.

Ceci implique que L = 2M + l + a + x; avec x > 0.

Cette distance x est celle qui suit la fin de la deuxième partie M2 du message.

Les distances D1, entre la tête de lecture 7 et la tête d'écriture 9, et D entre la tête d'écriture 9 et l'une ou l'autre des têtes de synchronisation 8 et 10 doivent alors répondre aux conditions suivantes :

$$D1 \geq 2M + l$$

$$D \geq M + l$$

$$D \leq M + l + a$$

$$D \leq L - (M+a) \rightarrow D \leq M + l + x$$

d'où :

1) si x = o       D = M+ l
2) si o < x < a     M + l ≤ D ≤ M + l + x
3) si x ≥ a      M + l ≤ D ≤ M + l + a

Il est à noter que le signal de validation du module de lecture-décodage 11 peut être fourni par un capteur de position qui détecte que la première tête de synchronisation 8 a atteint le début de la deuxième partie M2 du message. Cela peut par exemple se faire au moyen d'un module de décodage relié à la tête de synchronisation 8, qui reconnaît un premier message, suivi d'une interruption et qui fournit le signal de validation lors du début d'un nouveau message, en l'occurence M2.

## Revendications

1. Procédé pour enregistrer un nouveau message codé, à la place d'un message codé antérieur enregistré sur une piste magnétique (2) portée par un document support (1), par déplacement manuel dudit document devant des organes de traitement (7,8,9,10), lesdits messages codés antérieur et nouveau étant réalisés dans un système de codage autoporteur de leur signal d'horloge et étant composés d'une première partie M1 et d'une seconde partie M2 de longueur sensiblement égales, séparées par un intervalle l, caractérisé en ce que

     a) on enregistre la première partie Ml du nouveau message codé sur la première partie de la piste tout en lisant la seconde partie M2 du message antérieur sur la seconde partie de la piste, cette lecture étant utilisée pour synchroniser l'écriture de la première partie du nouveau message sur le signal d'horloge extrait de la lecture de ladite seconde partie du message antérieur,

     b) on enregistre la deuxième partie M2 du nouveau message codé sur la deuxième partie de la piste tout en lisant la première partie M1 du nouveau message codé enregistré sous a) sur la première partie de la piste (2), cette lecture étant utiliaée pour synchroniser l'écriture de la seconde partie du nouveau message sur le signal d'horloge extrait de la lecture de ladite première partie dudit nouveau message.

2. Système pour la mise en oeuvre du procédé selon la revendication 1, comprenant trois têtes magnétiques alignées, caractérisé en ce que la première tête rencontrée par le document support (1) au cours de son passage dans le système, est une tête de lecture dite première tête de synchronisation (8), la deuxième est une tête d'écriture (9) et la troisième est une tête de lecture dite seconde tête de synchronisation (10), la tête d'écriture (9) étant reliée à un générateur de signal d'écriture (12) reçevant en entrée, d'une part les données (13) dudit nouveau message à enregistrer et d'autre part, un signal d'horloge (14) asservi à la vitesse de défilement du document support (1), ledit signal d'horloge (14) étant élaboré par un circuit électronique (15) reçevant en entrée les signaux issus de la première (8) et de la seconde (10) tête de synchronisation.

3. Système selon la revendication 2, caractérisé en ce qu'il comporte en outre une quatrième tète magnétique qui est une tête de lecture (7) alignée avec les trois autres têtes (8, 9, 10) et située avant ladite première tête de synchronisation (8) dans le sens de passage du document support dans le système, ladite quatrième tête de lecture (8), étant reliée à un module de décodage (21) lui-même relié à un module de traitement (20) qui élabore lesdites données (13) du nouveau message à enregistrer envoyées audit générateur de signal d'écriture (12).

## Patentansprüche

1. Verfahren zum Aufzeichnen einer neuen kodierten Nachricht auf einer Magnetspur (2) eines Trägers (1) an der Stelle einer früher aufgezeichneten kodierten Nachricht, indem der Träger von Hand vor Verarbeitungsorganen (7, 8, 9, 10) vorbeibewegt wird, wobei die frühere und die neue Nachricht gemäß einem Kodesystem verschlüsselt sind, das sein eigenes Taktsignal enthält, und wobei die Nachricht aus einem ersten Teil M1 und einem zweiten Teil M2 von im wesentlichen gleicher Länge besteht, die voneinander einen Abstand l besitzen, dadurch gekennzeichnet, daß

a) man den ersten Teil M1 der neuen kodierten Nachricht auf dem ersten Teil der Magnetspur aufzeichnet und zugleich den im zweiten Teil der Magnetspur aufgezeichneten zweiten Teil M2 der früheren Nachricht liest, um das Aufzeichnen des ersten Teils der neuen Nachricht mit dem Taktsignal zu synchronisieren, das aus dem gelesenen zweiten Teil der früheren Nachricht entnommen wurde,
b) man den zweiten Teil M2 der neuen kodierten Nachricht auf dem zweiten Teil der Magnetspur aufzeichnet und zugleich den unter a) im ersten Teil der Magnetspur aufgezeichneten ersten Teil M1 der neuen Nachricht liest, um das Aufzeichnen des zweiten Teils der neuen Nachricht mit dem Taktsignal zu synchronisieren, das aus dem gelesenen ersten Teil der neuen Nachricht entnommen wurde.

2. System zur Durchführung des Verfahrens nach Anspruch 1 mit drei fluchtend angeordneten Magnetköpfen, dadurch gekennzeichnet, daß der erste beim Durchgang des Trägers (1) durch das System angetroffene Kopf ein erster Lesekopf (8) für die Synchronisierung ist, daß der zweite Kopf ein Schreibkopf (9) und der dritte Kopf weiter Lesekopf (10) für die Synchronisierung ist, daß der Schreibkopf (9) mit einem Schreibsignalgenerator (12) verbunden ist, der am Eingang einerseits die Daten (13) der aufzuzeichnenden neuen Nachricht und andererseits ein Taktsignal (14) empfängt, das an die Durchlaufgeschwindigkeit des Trägers (1) angepaßt ist, und daß das Taktsignal (14) in einer Elektronikschaltung gebildet wird, die eingangsseitig die Ausgangssignal des ersten (8) und des zweiten (10) Lesekopfes für die Synchronisierung empfängt.

3. System nach Anspruch 2, dadurch gekennzeichnet, daß es außerdem einen vierten Magnetkopf, nämlich einen Lesekopf (7) enthält, der mit den drei anderen Köpfen (8, 9, 10) fluchtet und vor dem ersten Lesekopf für die Synchronisierung (8) in Durchlaufrichtung des Trägers durch das System gesehen angeordnet ist, und daß der vierte Magnetkopf (7) an einen Dekodiermodul (21) angeschlossen ist, welcher zu einem Verarbeitungsmodul (20) führt, wobei dieser die Daten (13) der neuen aufzuzeichnenden und an den Schreibsignalgenerator (12) zu übermittelnden Nachricht bildet.

## Claims

1. Method for recording a new coded message in place of an old coded message recorded on a magnetic stripe (2) carried by a support document (1) by manual displacement of said document past processor units (7, 8, 9, 10), said old and new coded messages being produced by a coding system with their own clock signal and comprising a first part M1 and a second part M2 of substantially the same length separated by a gap l, characterised in that

a) the first part M1 of the new coded message is recorded on a first part of the stripe while reading the second part M2 of the old message on the second part of the stripe, said reading being used to synchronise the writing of the first part of the new message to a clock signal obtained by reading said second part of the old message,
b) the second part M2 of the new coded message is recorded on the second part of the stripe while reading the first part M1 of the new coded message recorded in a) on the first part of the stripe (2), said reading being used to synchronise the writing of the second part of the new message to the clock signal obtained by reading said first part of said new message.

2. System for implementing the method according to claim 1 comprising three aligned magnetic heads characterised in that the first head encountered by the support document (1) as it moves through the system is a read head called a first synchronisation head (8), the second is a write head (9) and the third is a read head called the second synchronisation head (10), the write head (9) being connected to a write signal generator (12) receiving as input the data (13) of said new message to be recorded and a clock signal (14) slaved to the speed of displacement of the support document (1), said clock signal (14) being produced by an electronic circuit (15) receiving as input signals from the first and second synchronisation heads (8, 10).

3. System according to claim 2 characterised in that it further comprises a fourth magnetic head which is a read head (7) aligned with the other three heads (8, 9, 10) and situated in front of said first synchronisation head (8) in the direction in which the support document passes through the system, said fourth read head (7) being connected to a decoder module (21) connected to a processor module (20) which produces said data (13) of the new message to be recorded which is sent to said write signal generator (12).

# FIG. 1

# FIG. 2

# FIG. 3

# FIG. 4